# EUROPEAN PATENT SPECIFICATION

(11) **EP 3 065 461 B1**
(45) Date of publication and mention of the grant of the patent: **01.11.2017**
(21) Application number: 14865760.4
(22) Date of filing: 27.06.2014
(51) Int. Cl.: H04W 36/00, H04W 76/02, H04W 36/30, H04W 36/08, H04W 24/02, H04W 74/08

(54) **METHOD AND DEVICE FOR ACQUIRING CONTEXT INFORMATION ABOUT USER EQUIPMENT**
VERFAHREN UND VORRICHTUNG ZUR ERFASSUNG VON KONTEXTINFORMATIONEN ÜBER BENUTZERENDGERÄT
PROCÉDÉ ET DISPOSITIF D'ACQUISITION D'INFORMATIONS DE CONTEXTE CONCERNANT UN ÉQUIPEMENT UTILISATEUR

(30) Priority: 27.11.2013 CN 201310637673
(43) Date of publication of application: 07.09.2016
(73) Proprietor: Huawei Technologies Co., Ltd., Longgang District Shenzhen, Guangdong 518129 (CN)
(72) Inventor: WANG, Yan, Shenzhen Guangdong 518129 (CN); CHEN, Xiongfei, Shenzhen Guangdong 518129 (CN)
(74) Representative: Gill Jennings & Every LLP
(86) International application number: PCT/CN2014/080939
(87) International publication number: WO 2015/078179

(56) References cited:
- EP-A2- 1 418 711
- WO-A1-2009/096883
- CN-A- 101 919 284
- CN-A- 103 648 122
- US-A1- 2013 183 971
- US-B1- 7 050 793

## Description

### TECHNICAL FIELD

This application relates to the field of communications technologies, and in particular, to a method and an apparatus for acquiring a context of user equipment.

### BACKGROUND

Radio resource control (Radio Resource Control, RRC) connection re-establishment plays an important role in maintaining radio link reliability and ensuring service continuity in an Long Term Evolution (Long Term Evolution, LTE) system.

A premise of successful RRC connection re-establishment is that a cell to which user equipment initiates RRC re-establishment stores a piece of effective context information of the user equipment.

However, the cell to which the user equipment initiates the RRC re-establishment may not have the context information of the user equipment. To ensure successful RRC re-establishment, in the prior art, when a user equipment selects a re-establishment cell and sends an RRC re-establishment request to a network-side device to which the re-establishment cell belongs, if the network-side device of the re-establishment cell does not have the context information of the user equipment, the context information is requested from a network-side device to which a serving cell of the user equipment belongs. After the network-side device to which the serving cell belongs transmits the context information of the user equipment to the network-side device of the re-establishment cell, the network-side device of the re-establishment cell delivers a re-establishment command to the user equipment, to continue the RRC re-establishment process.

WO 2009/096883 A1 and EP 1418711 A2 describe approaches to propagating information to neighboring APs and base stations.

In a process of implementing the present invention, it is found that that the prior art has at least the following technical problem: When a re-establishment cell selected by user equipment does not have context information of the user equipment, at least processes of acquiring and transmitting the context information of the user equipment need to be added. Consequently, an RRC re-establishment delay increases, and a service cannot recover rapidly.

### SUMMARY

This application provides a method and an apparatus for acquiring context information of user equipment, to resolve a technical problem in the prior art that an RRC re-establishment delay increases and a service cannot recover rapidly due to acquiring of context information.

To achieve the foregoing objective, this application provides the following technical solutions:
According to a first aspect, a method for acquiring context information of user equipment is provided, including:
   receiving, by a first network-side device to which a serving cell of a user equipment belongs, a measurement report sent by the user equipment;
   determining a handover target cell and a candidate cell according to the measurement report and a first neighboring-cell configuration relationship, wherein the measurement report comprises a cell which meets a requirement of a measurement event and is measured by the user equipment, wherein the first neighboring-cell configuration relationship comprises neighboring cells of the first network-side device, and wherein the neighboring cells of the first network-side device comprises neighboring cells of the serving cell of the user equipment; and
   separately sending context information of the user equipment to a second network-side device to which the handover target cell belongs and a third network-side device to which the candidate cell belongs, where the context information is used to re-establish a radio resource control (RRC) connection between the user equipment and the second network-side device or the third network-side device when a handover fails;
   wherein the determining, by the first network-side device, a handover target cell and a candidate cell according to the measurement report and a first neighboring-cell configuration relationship comprises:
      selecting, by the first network-side device, from at least one cell reported in the measurement report, a cell that is one of neighboring cells configured in the first neighboring-cell configuration relationship and that has best signal quality as the handover target cell; and
      selecting, by the first network-side device, from the neighboring cells configured in the first neighboring-cell configuration relationship, at least some neighboring cells except the handover target cell as candidate cells;
      wherein the context information is further used to: when the user equipment successfully performs random access and before the RRC connection is re-established, instruct the second network-side device to send, according to a second neighboring-cell configuration relationship, updated context information to a fourth network-side device to which at least some neighboring cells of the second network-side device belong.

According to a second aspect, an apparatus to which a serving cell of a user equipment belongs, including:
a report receiving unit, configured to receive a measurement report sent by the user equipment;
a neighboring-cell determining unit, configured to determine a handover target cell and a candidate cell according to the measurement report and a first neighboring-cell configuration relationship, wherein the measurement report comprises a cell which meets a requirement of a measurement event and is measured by the user equipment, wherein the first neighboring-cell configuration relationship comprises neighboring cells of the first network-side device, and wherein the neighboring cells of the first network-side device comprises neighboring cells of the serving cell of the user equipment; and
a first information sending unit, configured to separately send context information of the user equipment to a second network-side device to which the handover target cell belongs and a third network-side device to which the candidate cell belongs, where the context information is used to re-establish a radio resource control (RRC) connection between the user equipment and the second network-side device or the third network-side device when a handover fails;
wherein the neighboring-cell determining unit comprises:
   a first handover neighboring-cell determining unit, configured to select, from at least one cell reported in the measurement report, a cell that is one of neighboring cells configured in the first neighboring-cell configuration relationship and that has best signal quality as the handover target cell; and
   a first candidate-cell determining unit, configured to select, from the neighboring cells configured in the first neighboring-cell configuration relationship, at least some neighboring cells except the handover target cell as candidate cells;
   wherein the context information is further used to: when the user equipment successfully performs random access and before the RRC connection is re-established, instruct the second network-side device to send, according to a second neighboring-cell configuration relationship, updated context information to a fourth network-side device to which at least some neighboring cells of the second network-side device belong.

In conclusion, this application provides a method and an apparatus for acquiring context information of user equipment, where a first network-side device to which a serving cell of user equipment receives a measurement report sent by the user equipment, determines a handover target cell and a candidate cell according to the measurement report and a first neighboring-cell configuration relationship, and separately sends context information of the user equipment to a second network-side device to which the handover target cell belongs and a third network-side device to which the candidate cell belongs, so that when a handover fails and RRC connection re-establishment is triggered, the user equipment can re-establish an RRC connection to the second network-side device or the third network-side device according to the context information. According to the embodiments of this application, a quantity of cells that have context information and that are used as candidate re-establishment cells is increased, so that a probability that re-establishment is performed between user equipment and a cell having the context information is increased. When the re-establishment is performed between the user equipment and a cell having the context information, the re-establishment can succeed. In addition, no extra signaling interworking needs to be introduced in the re-establishment process, which facilitates rapid recovery of a service.

### BRIEF DESCRIPTION OF DRAWINGS

To describe the technical solutions in the embodiments of this application or in the prior art more clearly, the following briefly introduces the accompanying drawings required for describing the embodiments or the prior art. Apparently, the accompanying drawings in the following description show merely the embodiments of this application, and a person of ordinary skill in the art may still derive other drawings from these accompanying drawings without creative efforts.
FIG. 1 is a flowchart of an embodiment of a method for acquiring context information of user equipment according to an embodiment of this application;
FIG. 2 is a flowchart of another embodiment of a method for acquiring context information of user equipment according to an embodiment of this application;
FIG. 3 is a signaling diagram of still another embodiment of a method for acquiring context information of user equipment according to an embodiment of this application;
FIG. 4 is a schematic structural diagram of an embodiment of an apparatus for acquiring context information of user equipment according to an embodiment of this application;
FIG. 5 is a schematic structural diagram of an embodiment of a network-side device according to an embodiment of this application;
FIG. 6 is a schematic structural diagram of another embodiment of an apparatus for acquiring context information of user equipment according to an embodiment of this application; and
FIG. 7 is a schematic structural diagram of another embodiment of a network-side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

One of main ideas of the embodiments of this application may include:
A first network-side device receives a measurement report sent by user equipment; determines a handover target cell and a candidate cell according to the measurement report and a first neighboring-cell configuration relationship; and separately sends context information of the user equipment to a second network-side device to which the handover target cell belongs and a third network-side device to which the candidate cell belongs, so that when a handover fails and RRC connection re-establishment is triggered, the user equipment can re-establish an RRC connection to the second network-side device or the third network-side device according to the context information. According to the embodiments of this application, a probability that re-establishment is performed between user equipment and a cell having context information is increased. When the re-establishment is performed between the user equipment and a cell having the context information, the re-establishment can succeed. In addition, no extra signaling interworking needs to be introduced in the re-establishment process, which facilitates rapid recovery of a service.

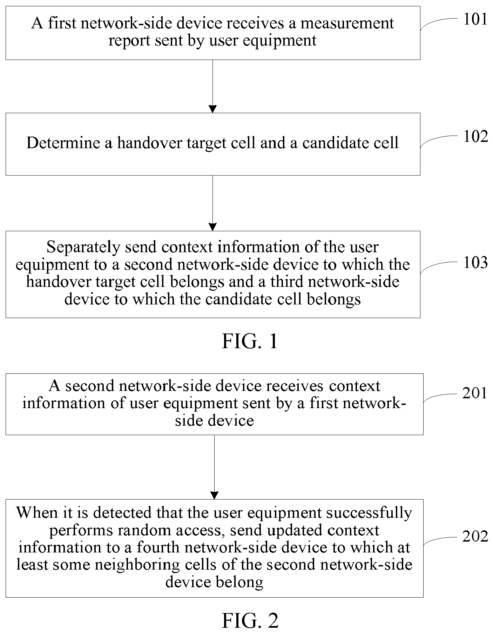

FIG. 1 is a flowchart of an embodiment of a method for acquiring context information of user equipment according to an embodiment of this application. The method may include the following steps:
101: A first network-side device receives a measurement report sent by user equipment.
   There are multiple reasons for triggering re-establishment of an radio resource control (Radio Resource Control, RRC) connection, which may include: detection of a radio link failure; a handover failure; a failure in moving from a current communications system to another system; an integrity check failure; and an RRC connection reconfiguration failure.
   The embodiments of this application are mainly applicable to RRC connection re-establishment triggered by a handover failure.
   Therefore, the first network-side device is a network-side device to which a serving cell of the user equipment, that is, a source cell, belongs. The network-side device may be a device that can transmit data and signaling to the user equipment, such as a base station, a relay station, a base station controller, or a wireless local area network access point, and controls multiple cells including the serving cell of the user equipment.
   In an actual application, when a cell handover needs to be performed, the first network-side device delivers measurement control information to the user equipment, to instruct the user equipment to perform cell measurement and report a measurement report. In this way, the first network-side device can receive the measurement report sent by the user equipment.
102: The first network-side device determines a handover target cell and a candidate cell according to the measurement report and a first neighboring-cell configuration relationship.

Neighboring cells of the first network-side device are configured in the first neighboring-cell configuration relationship, where the neighboring cells of the first network-side device include neighboring cells of the serving cell of the user equipment. The measurement report includes a cell which meets a requirement of a measurement event and is measured by the user equipment.

The first network-side device determines the handover target cell and the candidate cell according to the at least one cell reported in the measurement report and the neighboring cells configured in the first neighboring-cell configuration relationship.

The handover target cell refers to a cell to which the user equipment needs to be handed over in a cell handover. The handover target cell may be a cell that is one of the neighboring cells configured in the first neighboring-cell configuration relationship and that has best signal quality among the at least one cell reported in the measurement report, where being one of the neighboring cells configured in the first neighboring-cell configuration relationship may be specifically being one of the neighboring cells of the serving cell of the user equipment.

There may be multiple possible implementation manners for selecting the candidate cell.

In one possible implementation manner, at least some neighboring cells except the handover target cell may be selected from the neighboring cells configured in the first neighboring-cell configuration relationship as candidate cells.

The at least some neighboring cells may refer to all neighboring cells except the handover target cell in the neighboring cells configured in the first neighboring-cell configuration relationship.

Certainly, to avoid relatively high signaling overheads, the at least some neighboring cells may refer to a preset quantity of neighboring cells except the handover target cell that are selected from the neighboring cells configured in the first neighboring-cell configuration relationship.

In an actual application, the measurement report may report only one cell. In this case, if the cell reported in the measurement report is a neighboring cell configured in the first neighboring-cell configuration relationship, the cell reported in the measurement report is used as the handover target cell. At least some neighboring cells except the handover target cell among the neighboring cells configured in the first neighboring-cell configuration relationship are selected as candidate cells.

In another possible implementation manner, a cell except the handover target cell is selected from the at least one cell reported in the measurement report as the candidate cell.

For example, the measurement report reports four cells, of which three cells are neighboring cells configured in the first neighboring-cell configuration relationship. In this case, a cell having best signal quality may be selected from the three cells as the handover target cell, and the other three cells reported in the measurement report are used as candidate cells. When a handover of the user equipment fails, there is a high probability that a cell reported in the measurement report becomes a re-establishment cell in RRC connection re-establishment. Therefore, by means of this implementation manner, the cells reported in the measurement report all have context information of the user equipment, and when the re-establishment is performed between the user equipment and the cells reported in the measurement report, the re-establishment can succeed.

In still another possible implementation manner, a cell that is not the handover target cell and is a neighboring cell configured in the first neighboring-cell configuration relationship may be selected from the at least one cell reported in the measurement report as the candidate cell.

For example, in the foregoing example, not all the four cells reported in the measurement report have a neighboring-cell relationship with the first network-side device. Assuming that three cells of the four cells are neighboring cells configured in the first neighboring-cell configuration relationship, a cell having best signal quality is selected from the three cells as the handover target cell and the other two cells of the three cells are used as candidate cells.

Because the neighboring cells of the first network-side device include the neighboring cells of the serving cell of the user equipment, in the foregoing possible implementation manners, to further improve accuracy, the neighboring cells configured in the first neighboring-cell configuration relationship may specifically refer to the neighboring cells of the serving cell of the user equipment.

It should be noted that the foregoing description is given based on a manner of selecting a cell having best signal quality as the handover target cell, the handover target cell may be selected in other manners, and the selection of the handover target cell is not specifically limited in this application.
103: Separately send context information of the user equipment to a second network-side device to which the handover target cell belongs and a third network-side device to which the candidate cell belongs.

The context information is used to re-establish a radio resource control (RRC) connection between the user equipment and the second network-side device or the third network-side device when a handover fails. That is, when a handover fails and RRC connection re-establishment is triggered, the second network-side device or the third network-side device may rapidly and successfully re-establish an RRC connection to the user equipment according to the context information upon reception of a re-establishment request from the user equipment.

It should be noted that "first", "second", and "third" in the first network-side device, the second network-side device, and the third network-side device are merely used to distinguish network-side devices to which different types of cells belong, but not to require or imply that any actual relationship or sequence exists among the network-side devices.

The second network-side device refers to a network-side device to which the handover target cell belongs, and the third network-side device refers to a network-side device to which the candidate cell belongs. When there are multiple candidate cells, there are multiple third network-side devices.

When a cell handover is performed, the first network-side device sends handover preparation message to the second network-side device. Therefore, the context information of the user equipment may be carried in the handover preparation message and sent to the second network-side device.

In addition, the first network-side device may send the context information to the third network-side device, and the sending may also be implemented by using a handover preparation message. A distinguishing identifier is set in the handover preparation message, to distinguish from the handover preparation message sent to the second network-side device. When there are multiple candidate cells, the first network-side device sends the context information of the user equipment to a third network-side device to which each candidate cell belongs.

The context information of the user equipment is determined according to a behavior and information that are required by an operation needing to be executed. The context information includes at least an ID of the user equipment, so that in RRC re-establishment, a network-side device can determine, according to the context information, whether the user equipment requesting re-establishment is authorized, so as to determine whether to allow the re-establishment. If the network-side device does not have the ID of the user equipment requesting the RRC connection re-establishment, the re-establishment is rejected.

In an RRC connection re-establishment process, the user equipment selects a cell having good signal quality as a re-establishment cell according to signal quality, and sends an RRC re-establishment request to a network-side device to which the re-establishment cell belongs. In this embodiment of this application, when a handover fails and RRC connection re-establishment is triggered, not only the first network-side device to which the serving cell of the user equipment and the second network-side device to which the handover target cell belongs have the context information of the user equipment, but also the third network-side device to which the candidate cell belongs has the context information of the user equipment. When the re-establishment is performed between the user equipment and these cells, the re-establishment can succeed. No signaling interworking such as acquiring and transmission of context information is required in the re-establishment process, which facilitates rapid recovery of a service.

In this embodiment, the first network-side device sends the context information of the user equipment not only to the second network-side device of the handover target cell, but also to the third network-side device of the candidate cell except the handover target cell, so that the handover target cell and the candidate cell both support RRC re-establishment of the user equipment, thereby increasing a success rate of RRC re-establishment. Compared with the prior art in which only the serving cell and the handover target cell have context information, in this embodiment, a probability that the re-establishment cell is a cell having context information is increased. In addition, because the candidate cell is determined according to the neighboring cells configured in the first neighboring-cell configuration relationship and the at least one cell reported in the measurement report, a probability that the candidate cell is used as the re-establishment cell is further increased, thereby increasing a probability that re-establishment is performed between the user equipment and a cell having context information. When the re-establishment is performed between the user equipment and a cell having the context information, the re-establishment can succeed. In addition, no extra signaling interworking needs to be introduced in the re-establishment process, which facilitates rapid recovery of a service.

After the first network-side device determines the handover target cell, a cell handover can be performed. In a cell handover process, the user equipment first needs to perform random access to the handover target cell. When the random access succeeds, it indicates that the user equipment may move to the handover target cell. In this case, to increase the probability that the re-establishment cell has context information in the RRC connection re-establishment, the context information may be further used to: when the user equipment successfully performs random access, instruct the second network-side device to send, according to a second neighboring-cell configuration relationship, updated context information to a fourth network-side device to which at least some neighboring cells of the second network-side device belong. The neighboring cells of the second network-side device are configured in the second neighboring-cell configuration relationship.

In an actual application, when the user equipment successfully performs random access to the second network-side device, the second network-side device updates the context information of the user equipment. In this case, only the second network-side device has the updated context information of the user equipment. The re-establishment may succeed only when the re-establishment is performed between the user equipment and the handover target cell. Therefore, in this embodiment of this application, the context information may further be used to instruct the second network-side device to send the updated context information of the user equipment to the fourth network-side device, so that cells having the updated context information not only include the handover target cell, but also include a cell controlled by the fourth network-side device, thereby increasing a probability that the re-establishment cell selected by the user equipment is a cell having the context information, and increasing the probability that re-establishment is performed between the user equipment and a cell having the context information. When the re-establishment is performed between the user equipment and a cell having the context information, the re-establishment can succeed. In addition, no extra signaling interworking needs to be introduced in the re-establishment process, which facilitates rapid recovery of a service.

FIG. 2 is a flowchart of another embodiment of a method for acquiring context information of user equipment according to an embodiment of this application. The method may include:
201: A second network-side device receives context information of user equipment sent by a first network-side device.
   The context information is context information separately sent to the second network-side device to which a handover target cell belongs and a third network-side device to which a candidate cell belongs after the first network-side device receives a measurement report of the user equipment and determines the handover target cell and the candidate cell according to the measurement report and a first neighboring-cell configuration relationship.
202: When detecting that the user equipment successfully performs random access, the second network-side device sends, according to a second neighboring-cell configuration relationship, updated context information to a fourth network-side device to which at least some neighboring cells of the second network-side device belong.

The updated context information is used to re-establish an RRC connection between the user equipment and the fourth network-side device when a handover fails.

The first network-side device is a network-side device to which a serving cell of the user equipment belongs, and the second network-side device is a network-side device to which the handover target cell of the user equipment belongs. The context information sent by the first network-side device to the second network-side device is generally carried in a handover preparation message.

After receiving the context information of the user equipment sent by the first network-side device, the second network-side device prepares for a handover. In the handover process, the user equipment first needs to perform random access to the handover target cell.

Neighboring cells of the second network-side device are configured in the second neighboring-cell configuration relationship. Therefore, if the second network-side device detects that the user equipment successfully performs random access, which does not necessarily indicate a successful handover, the second network-side device may update the context information, and send the updated context information to the fourth network-side device to which at least some neighboring cells of the second network-side device, that is, the at least some neighboring cells of the second network-side device that are configured in the second neighboring-cell configuration relationship, belong. The at least some neighboring cells may be a quantity of neighboring cells among the neighboring cells of the second network-side device. A network-side device to which each cell of the at least some neighboring cells belongs is the fourth network-side device.

The neighboring cells of the second network-side device that are configured in the second neighboring-cell configuration relationship include neighboring cells of the handover target cell. In a possible implementation manner, to further improve accuracy, in this embodiment, the sending updated context information to a fourth network-side device to which at least some neighboring cells of the second network-side device belong may be specifically sending the updated context information to the fourth network-side device to which at least some neighboring cells of the handover target cell belong.

Before the context information is updated, cells having the context information include the serving cell, the handover target cell, and the candidate cell; after the context information is updated, the cells having the context information include the handover target cell and at least some neighboring cells of the second network-side device. In this way, a quantity of cells having the context information is increased, thereby increasing a probability that re-establishment is performed between the user equipment and a cell having the context information. When the re-establishment is performed between the user equipment and a cell having the context information, the re-establishment can succeed. In addition, no extra signaling interworking needs to be introduced in the re-establishment process, which facilitates rapid recovery of a service.

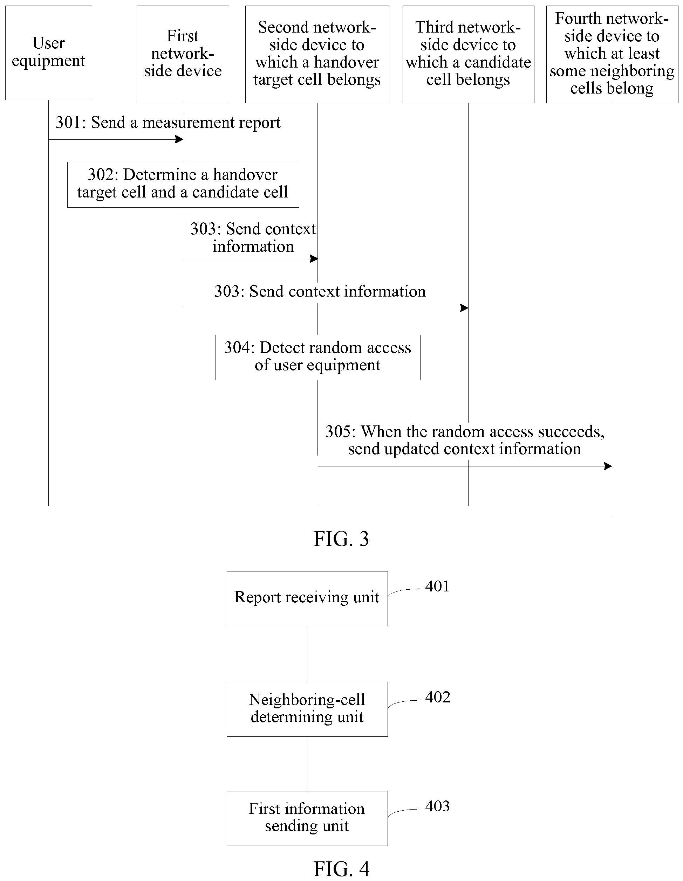

FIG. 3 is a signaling diagram of still another embodiment of a method for acquiring context information of user equipment according to an embodiment of this application. The method may include the following steps:
301: User equipment sends a measurement report to a first network-side device.
302: The first network-side device determines a handover target cell and a candidate cell according to the measurement report sent by the user equipment and a first neighboring-cell configuration relationship.
303: The first network-side device separately sends context information of the user equipment to a second network-side device to which the handover target cell belongs and a third network-side device to which the candidate cell belongs.
304: The second network-side device receives the context information sent by the first network-side device and detects random access of the user equipment.
305: When detecting that the user equipment successfully performs random access, the second network-side device sends updated context information to a fourth network-side device to which at least some neighboring cells of the second network-side device belong.

Therefore, before the context information of the user equipment is updated, network-side devices having the context information of the user equipment include at least the first network-side device, the second network-side device, and the third network-side device.

After the context information of the user equipment is updated, network-side devices having the updated context information of the user equipment include at least the second network-side device and the fourth network-side device.

Therefore, in this embodiment of this application, a probability that the candidate cell having the context information or the updated context information is selected as a re-establishment cell is increased. When a handover fails and RRC connection re-establishment is triggered, a probability that a re-establishment cell selected by the user equipment is a cell having the context information is increased, thereby increasing a success rate of RRC re-establishment. In addition, no extra signaling interworking needs to be introduced in the re-establishment process, which facilitates rapid recovery of a service.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that the embodiments described in this specification all belong to exemplary embodiments, and the involved actions and modules are not necessarily required by this application.

FIG. 4 is a schematic structural diagram of an embodiment of an apparatus for acquiring context information of user equipment according to an embodiment of this application. Corresponding to the method for acquiring context information of user equipment that is provided in the embodiment of this application described with reference to FIG. 1, the apparatus for acquiring context information of user equipment of this embodiment may be specifically applied to a network-side device in a serving cell of user equipment in an actual application. The apparatus may include:
a report receiving unit 401, configured to receive a measurement report sent by user equipment; and
a neighboring-cell determining unit 402, configured to determine a handover target cell and a candidate cell according to the measurement report and a first neighboring-cell configuration relationship.

Neighboring cells of the first network-side device to which the apparatus is applied are configured in the first neighboring-cell configuration relationship, where the neighboring cells of the first network-side device include neighboring cells of a serving cell of the user equipment.

The measurement report includes a cell measured by the user equipment and satisfying a measurement event.

The handover target cell refers to a cell to which the user equipment needs to be handed over in a cell handover. The handover target cell may be a cell that is one of neighboring cells configured in the first neighboring-cell configuration relationship and that has best signal quality among at least one cell reported in the measurement report, where being one of the neighboring cells configured in the first neighboring-cell configuration relationship may be specifically being one of the neighboring cells of the serving cell of the user equipment.

There may be multiple possible implementation manners for selecting the candidate cell.

In a possible implementation manner, the neighboring-cell determining unit may include:
a first handover neighboring-cell determining unit, configured to select, from at least one cell reported in the measurement report, a cell that is one of neighboring cells configured in the first neighboring-cell configuration relationship and that has best signal quality as the handover target cell; and
a first candidate-cell determining unit, configured to select, from the neighboring cells configured in the first neighboring-cell configuration relationship, at least some neighboring cells except the handover target cell as candidate cells.

The at least some neighboring cells may refer to all neighboring cells except the handover target cell in the neighboring cells configured in the first neighboring-cell configuration relationship.

Certainly, to avoid relatively high signaling overheads, the at least some neighboring cells may refer to a preset quantity of neighboring cells except the handover target cell that are selected from the neighboring cells configured in the first neighboring-cell configuration relationship.

In another possible implementation manner, the neighboring-cell determining unit may include:
a second handover neighboring-cell determining unit, configured to select, from at least one cell reported in the measurement report, a cell that is one of neighboring cells configured in the first neighboring-cell configuration relationship and that has best signal quality as the handover target cell; and
a second candidate-cell determining unit, configured to select, from the at least one cell reported in the measurement report, a cell except the handover target cell as the candidate cell. In still another possible implementation manner, the neighboring-cell determining unit may include:
   a third handover neighboring-cell determining unit, configured to select, from at least one cell reported in the measurement report, a cell that is one of neighboring cells configured in the first neighboring-cell configuration relationship and that has best signal quality as the handover target cell; and
   a third candidate-cell determining unit, configured to select, from the at least one cell reported in the measurement report, a cell that is not the handover target cell and that is a neighboring cell configured in the first neighboring-cell configuration relationship as the candidate cell.
   a first information sending unit 403, configured to separately send context information of the user equipment to a second network-side device to which the handover target cell belongs and a third network-side device to which the alternative cell belongs.

The context information is used to re-establish a radio resource control (RRC) connection between the user equipment and the second network-side device or the third network-side device when a handover fails. That is, when a handover fails and RRC connection re-establishment is triggered, the second network-side device or the third network-side device may rapidly and successfully re-establish an RRC connection to the user equipment according to the context information upon reception of a re-establishment request from the user equipment.

The second network-side device refers to a network-side device to which the handover target cell belongs, and the third network-side device refers to a network-side device to which the candidate cell belongs. When there are multiple candidate cells, there are multiple third network-side devices.

In this embodiment, the apparatus sends the context information of the user equipment not only to the second network-side device of the handover target cell, but also to the third network-side device of the candidate cell except the handover target cell, so that the handover target cell and the candidate cell both support RRC re-establishment of the user equipment, thereby increasing a success rate of RRC re-establishment. Moreover, a quantity of cells that have the context information and that can be used as candidate re-establishment cells is increased, thereby increasing a probability that re-establishment is performed between the user equipment and a cell having the context information, and increasing the success rate of RRC re-establishment. When the re-establishment is performed between the user equipment and a cell having the context information, the re-establishment can succeed. In addition, no extra signaling interworking needs to be introduced in the re-establishment process, which facilitates rapid recovery of a service.

After receiving the context information of the user equipment, the second network-side device prepares for a handover. In the cell handover process, the user equipment first needs to perform random access to the handover target cell. When the random access succeeds, it indicates that the user equipment may move to the handover target cell. In this case, to increase a probability that the re-establishment cell has context information in the RRC connection re-establishment, the context information may be further used to: when the user equipment successfully performs random access, instruct the second network-side device to send, according to a second neighboring-cell configuration relationship, updated context information to a fourth network-side device to which at least some neighboring cells of the second network-side device belong.

When the user equipment successfully performs random access to the second network-side device, the second network-side device updates the context information of the user. In this case, only the second network-side device has the updated context information of the user equipment. The re-establishment may succeed only when the re-establishment is performed between the user equipment and the handover target cell. Therefore, in this embodiment of this application, because the second network-side device sends the updated context information to the fourth network-side device, cells having the updated context information not only include the handover target cell, but also include a cell controlled by the fourth network-side device, thereby increasing a probability that the re-establishment cell selected by the user equipment is a cell having the context information, and increasing the probability that re-establishment is performed between the user equipment and a cell having the context information. When the re-establishment is performed between the user equipment and a cell having the context information, the re-establishment can succeed. In addition, no extra signaling interworking needs to be introduced in the re-establishment process, which facilitates rapid recovery of a service.

In an actual application, the apparatus for acquiring context information of user equipment shown in FIG. 4 may be applied to a network-side device of a serving cell of the user equipment. The network-side device may refer to a device that can transmit data and signaling to the user equipment, such as a base station, a relay station, a base station controller, or a wireless local area network access point, and controls a serving cell of a terminal. By means of the network-side device that is deployed with the apparatus for acquiring context information of user equipment of this embodiment, a success rate of re-establishment can be increased when a handover fails and RRC connection re-establishment is triggered, which facilitates rapid recovery of a service.

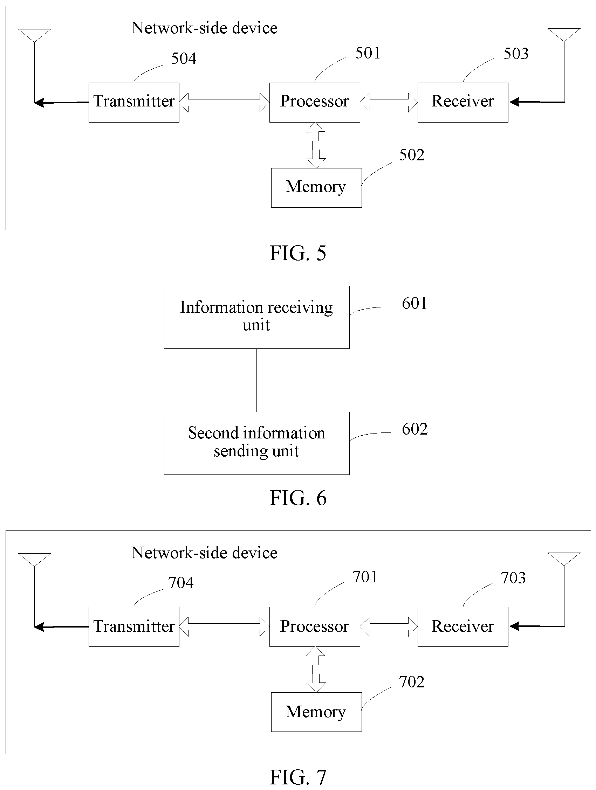

Based on the foregoing description, a person skilled in the art may clearly understand that this application may be implemented by software in addition to a necessary general hardware platform. Referring to FIG. 5, an embodiment of this application further provides an embodiment of a network-side device. The network-side device includes at least a processor 501, and a memory 502, a receiver 503, and a transmitter 504 that are separately connected to the processor 501 by a bus.

The memory 502 stores a set of program instructions. The memory may be a high-speed RAM memory, or may be a non-volatile memory (non-volatile memory), such as at least one magnetic disk memory.

The processor 501 is configured to invoke the program instructions stored in the memory 502, to execute the following operations:
triggering the receiver 504 to receive a measurement report sent by user equipment;
determining a handover target cell and a candidate cell according to the measurement report and a first neighboring-cell configuration relationship; and
triggering the transmitter 504 to separately send context information of the user equipment to a second network-side device to which the handover target cell belongs and a third network-side device to which the candidate cell belongs.

The context information is used to re-establish a radio resource control RRC connection between the user equipment and the second network-side device or the third network-side device when a handover fails.

The second network-side device and the third network-side device are devices different from the network-side device provided in this embodiment and are located in different cells.

The processor may be a central processing unit (CPU) or an application-specific integrated circuit (Application Specific Integrated Circuit, ASIC), or is configured as one or more integrated circuits that implement the embodiment of the present invention.

FIG. 6 is a schematic structural diagram of another embodiment of an apparatus for acquiring context information of user equipment according to an embodiment of this application. Corresponding to the method for acquiring context information of user equipment that is provided in the embodiment of this application described with reference to FIG. 1, the apparatus for acquiring context information of user equipment of this embodiment may be specifically applied to a network-side device in a handover target cell of user equipment in an actual application. The apparatus may include:
an information receiving unit 601, configured to receive context information of user equipment sent by a first network-side device, where
the context information is context information separately sent to a network-side device to which a handover target cell belongs and a network-side device to which a candidate cell belongs after the first network-side device receives a measurement report of the user equipment and determines the handover target cell and the candidate cell according to the measurement report and a first neighboring-cell configuration relationship, and
the network-side device of the handover target cell is a network-side device to which the apparatus of this embodiment is applied; and
a second information sending unit 602, configured to: when it is detected that the user equipment successfully performs random access, send, according to a second neighboring-cell configuration relationship, updated context information to a fourth network-side device to which at least some neighboring cells configured in the second neighboring-cell configuration relationship belong, where
the updated context information is used to re-establish an RRC connection between the user equipment and the fourth network-side device when a handover fails.

Neighboring cells of the second network-side device are configured in the second neighboring-cell configuration relationship. Therefore, when it is detected that the user equipment successfully performs random access, which does not necessarily indicate a successful handover, the updated context information may be sent to the fourth network-side device in the at least some neighboring cells configured in the second neighboring-cell configuration relationship.

The at least some neighboring cells may be a quantity of neighboring cells among the neighboring cells configured in the second neighboring-cell configuration relationship. A network-side device to which each cell of the at least some neighboring cells belongs is the fourth network-side device.

The neighboring cells of the second network-side device that are configured in the second neighboring-cell configuration relationship include neighboring cells of the handover target cell. In a possible implementation manner, to further improve accuracy, in this embodiment, the sending, by the second information sending unit 602, updated context information to a fourth network-side device to which at least some neighboring cells of the second network-side device belong may be specifically sending the updated context information to the fourth network-side device to which at least some neighboring cells of the handover target cell belong.

The fourth network-side device has the context information of the user equipment, so that at least some neighboring cells of the handover target cell may also be used as candidate re-establishment cells, thereby increasing a selection range of the re-establishment cells having the updated context information. In this way, a quantity of cells having the context information is increased, thereby increasing a probability that re-establishment is performed between the user equipment and a cell having the context information. When the re-establishment is performed between the user equipment and a cell having the context information, the re-establishment can succeed. In addition, no extra signaling interworking needs to be introduced in the re-establishment process, which facilitates rapid recovery of a service.

In an actual application, the apparatus for acquiring context information of user equipment shown in FIG. 6 may be applied to a network-side device of the handover target cell of the user equipment. The network-side device may refer to a device that can transmit data and signaling to the user equipment, such as a base station, a repeater station, a base station controller, or a wireless local area network access point, and controls a serving cell of a terminal. By means of the network-side device that is deployed with the apparatus for acquiring context information of user equipment of this embodiment, a re-establishment delay can be reduced when a handover fails and RRC connection re-establishment is triggered, which facilitates rapid recovery of a service.

Based on the foregoing description, a person skilled in the art may clearly understand that this application may be implemented by software in addition to a necessary general hardware platform. Referring to FIG. 7, an embodiment of this application further provides another embodiment of a network-side device. The network-side device includes at least a processor 701, and a memory 702, a receiver 703, and a transmitter 704 separately connected to the processor 701 by a bus.

The memory 702 stores a set of program instructions. The memory may be a high-speed RAM memory, or may be a non-volatile memory (non-volatile memory), such as at least one magnetic disk memory.

The processor 701 is configured to invoke the program instructions stored in the memory 702, to execute the following operations:
triggering the receiver 703 to context information of user equipment sent by a first network-side device, where
the context information is context information separately sent to a network-side device to which a handover target cell belongs and a network-side device to which a candidate cell belongs after the first network-side device receives a measurement report of the user equipment and determines the handover target cell and the candidate cell according to the measurement report and a first neighboring-cell configuration relationship; and
when it is detected that the user equipment successfully performs random access, triggering the transmitter 704 to send, according to a second neighboring-cell configuration relationship, updated context information to a fourth network-side device to which at least some neighboring cells of a second network-side device belong, where
the updated context information is used to re-establish an RRC connection between the user equipment and the fourth network-side device when a handover fails.

The processor may be a central processing unit (CPU) or an application-specific integrated circuit (Application Specific Integrated Circuit, ASIC), or is configured as one or more integrated circuits that implement the embodiment of the present invention.

The embodiments in this specification are all described in a progressive manner, for same or similar parts in the embodiments, reference may be made to these embodiments, and each embodiment focuses on a difference from other embodiments. The apparatus disclosed in the embodiment is basically similar to the method disclosed in the embodiment, and therefore is described briefly; for related parts, reference may be made to partial descriptions of the method.

Finally, it should be noted that in this specification, relational terms such as first and second are only used to distinguish one entity or operation from another, and do not necessarily require or imply that any actual relationship or sequence exists between these entities or operations. Moreover, the terms "include", "include", or their any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

For ease of description, the foregoing apparatus is described by dividing functions into various units. Certainly, during implementation of this application, the functions of each unit may be implemented in a same piece of or a plurality of pieces of software and/or hardware.

Based on the foregoing descriptions of the implementation manners, a person skilled in the art may clearly understand that this application may be implemented by software in addition to a necessary general hardware platform. Based on such an understanding, the technical solutions of this application essentially or the part contributing to the prior art may be implemented in a form of a software product. The computer software product may be stored in a storage medium, such as a ROM/RAM, a magnetic disk, or an optical disc, and includes several instructions for instructing a computer device (which may be a personal computer, a server, a network device, or the like) to perform the methods described in the embodiments or some parts of the embodiments of this application.

The foregoing description of the disclosed embodiments enables a person skilled in the art to implement or use this application. Various modifications to the embodiments are obvious to the person skilled in the art, and general principles defined in this specification may be implemented in other embodiments without departing from the scope of this application. Therefore, this application will not be limited to the embodiments described in this specification but extends to the widest scope that complies with the principles and novelty disclosed in this specification.

## Claims

1. A method for acquiring context information of a user equipment, comprising the steps of:
receiving (101), by a first network-side device to which a serving cell of a user equipment belongs, a measurement report sent by the user equipment;
determining (102), by the first network-side device, a handover target cell and a candidate cell according to the measurement report and a first neighboring-cell configuration relationship, wherein the measurement report comprises a cell which meets a requirement of a measurement event and is measured by the user equipment, wherein the first neighboring-cell configuration relationship comprises neighboring cells of the first network-side device, and wherein the neighboring cells of the first network-side device comprises neighboring cells of the serving cell of the user equipment; and
separately sending (103), by the first network-side device, context information of the user equipment to a second network-side device to which the handover target cell belongs and a third network-side device to which the candidate cell belongs, wherein the context information is used to re-establish a radio resource control, RRC, connection between the user equipment and the second network-side device or the third network-side device when a handover fails;
wherein the determining, by the first network-side device, a handover target cell and a candidate cell according to the measurement report and a first neighboring-cell configuration relationship comprises:
selecting, by the first network-side device, from at least one cell reported in the measurement report, a cell that is one of neighboring cells configured in the first neighboring-cell configuration relationship and that has best signal quality as the handover target cell; and
selecting, by the first network-side device, from the neighboring cells configured in the first neighboring-cell configuration relationship, at least some neighboring cells except the handover target cell as candidate cells;
wherein the context information is further used to: when the user equipment successfully performs random access and before the RRC connection is re-established, instruct the second network-side device to send, according to a second neighboring-cell configuration relationship, updated context information to a fourth network-side device to which at least some neighboring cells of the second network-side device belong.

2. An apparatus to which a serving cell of a user equipment belongs, comprising:
a report receiving unit (401), configured to receive a measurement report sent by the user equipment;
a neighboring-cell determining unit (402), configured to determine a handover target cell and a candidate cell according to the measurement report and a first neighboring-cell configuration relationship, wherein the measurement report comprises a cell which meets a requirement of a measurement event and is measured by the user equipment, wherein the first neighboring-cell configuration relationship comprises neighboring cells of the first network-side device, and wherein the neighboring cells of the first network-side device comprises neighboring cells of the serving cell of the user equipment; and
a first information sending unit (403), configured to separately send context information of the user equipment to a second network-side device to which the handover target cell belongs and a third network-side device to which the candidate cell belongs, wherein the context information is used to re-establish a radio resource control, RRC, connection between the user equipment and the second network-side device or the third network-side device when a handover fails;
wherein the neighboring-cell determining unit comprises:
a first handover neighboring-cell determining unit, configured to select, from at least one cell reported in the measurement report, a cell that is one of neighboring cells configured in the first neighboring-cell configuration relationship and that has best signal quality as the handover target cell; and
a first candidate-cell determining unit, configured to select, from the neighboring cells configured in the first neighboring-cell configuration relationship, at least some neighboring cells except the handover target cell as candidate cells;
wherein the context information is further used to: when the user equipment successfully performs random access and before the RRC connection is re-established, instruct the second network-side device to send, according to a second neighboring-cell configuration relationship, updated context information to a fourth network-side device to which at least some neighboring cells of the second network-side device belong.

## Patentansprüche

1. Verfahren zur Erfassung von Kontextinformationen einer Benutzereinrichtung, umfassend folgende Schritte:
Empfangen (101) durch eine erste netzseitige Vorrichtung, zu der eine versorgende Zelle einer Benutzereinrichtung gehört, eines durch die Benutzereinrichtung gesendeten Messungsberichts;
Bestimmen (102) durch die erste netzseitige Vorrichtung einer Weiterreichungszielzelle und einer angehenden Zelle gemäß dem Messungsbericht und einem ersten Nachbarzelleneinrichtungsverhältnis, wobei der Messungsbericht eine Zelle umfasst, die einem Erfordernis eines Messungsereignisses entspricht und durch die Benutzereinrichtung gemessen wird, wobei das erste Nachbarzelleneinrichtungsverhältnis Nachbarzellen der ersten netzseitigen Vorrichtung umfasst und wobei die Nachbarzellen der ersten netzseitigen Vorrichtung Nachbarzellen der versorgenden Zelle der Benutzereinrichtung umfasst; und
getrenntes Senden (103) durch die erste netzseitige Vorrichtung von Kontextinformationen der Benutzereinrichtung zu einer zweiten netzseitigen Vorrichtung, zu der die Weiterreichtungszielzelle gehört und einer dritten netzseitigen Vorrichtung, zu der die angehende Zelle gehört, wobei die Kontextinformationen zur Wiederherstellung einer Ressourcensteuerungs(RRC - Radio Resource Control)-Verbindung zwischen der Benutzereinrichtung und der zweiten netzseitigen Vorrichtung oder der dritten netzseitigen Vorrichtung benutzt wird, wenn eine Weiterreichung fehlgeht;
wobei das Bestimmen durch die erste netzseitige Vorrichtung einer Weiterreichungszielzelle und einer angehenden Zelle gemäß dem Messungsbericht und einem ersten Nachbarzelleneinrichtungsverhältnis umfasst:
Auswählen durch die erste netzseitige Vorrichtung aus wenigstens einer in dem Messungsbericht gemeldeten Zelle, einer Zelle, die eine der in dem ersten Nachbarzelleneinrichtungsverhältnis eingerichteten Nachbarzellen ist und die die beste Signalgüte als die Weiterreichungszielzelle aufweist; und
Auswählen durch die erste netzseitige Vorrichtung aus den in dem ersten Nachbarzelleneinrichtungsverhältnis eingerichteten Nachbarzellen von wenigstens einigen Nachbarzellen außer der Weiterreichungszielzelle als angehende Zellen;
wobei die Kontextinformationen weiterhin benutzt werden zum: wenn die Benutzereinrichtung erfolgreich zufallsmäßigen Zugang durchführt und bevor die RRC-Verbindung wiederhergestellt wird, Anweisen der zweiten netzseitigen Vorrichtung zum Senden gemäß einem zweiten Nachbarzelleneinrichtungsverhältnis von aktualisierten Kontextinformationen zu einer vierten netzseitigen Vorrichtung, zu der wenigstens einige Nachbarzellen der zweiten netzseitigen Vorrichtung gehören.

2. Gerät, zu dem eine versorgende Zelle einer Benutzereinrichtung gehört, umfassend:
eine Berichtempfangseinheit (401), eingerichtet zum Empfangen eines durch die Benutzereinrichtung gesendeten Messungsberichts;
eine Nachbarzellenbestimmungseinheit (402), eingerichtet zum Bestimmen einer Weiterreichungszielzelle und einer angehenden Zelle gemäß dem Messungsbericht und einem ersten Nachbarzelleneinrichtungsverhältnis, wobei der Messungsbericht eine Zelle umfasst, die ein Erfordernis eines Messungsereignisses erfüllt und durch die Benutzereinrichtung gemessen wird, wobei das erste Nachbarzelleneinrichtungsverhältnis Nachbarzellen der ersten netzseitigen Vorrichtung umfasst und wobei die Nachbarzellen der ersten netzseitigen Vorrichtung Nachbarzellen der versorgenden Zelle der Benutzereinrichtung umfasst; und
eine erste Informationssendeeinheit (403), eingerichtet zum getrennten Senden von Kontextinformationen der Benutzereinrichtung zu einer zweiten netzseitigen Vorrichtung, zu der die Weiterreichungszielzelle gehört, und einer dritten netzseitigen Vorrichtung, zu der die angehende Zelle gehört, wobei die Kontextinformationen zum Herstellen einer Funkressourcensteuerungs(RRC - Radio Resource Control)-Verbindung zwischen der Benutzereinrichtung und der zweiten netzseitigen Vorrichtung oder der dritten netzseitigen Vorrichtung, wenn eine Weiterreichung fehlgeht, benutzt wird;
wobei die Nachbarzellenbestimmungseinheit umfasst:
eine erste Weiterreichtungs-Nachbarzellenbestimmungseinheit, eingerichtet zum Auswählen, aus wenigstens einer in dem Messungsbericht gemeldeten Zelle, einer Zelle, die eine von in dem ersten Nachbarzelleneinrichtungsverhältnis eingerichteten Nachbarzellen ist und die die beste Signalgüte als die Weiterreichungszielzelle aufweist; und
eine erste, angehende Zellen bestimmende Einheit, eingerichtet zum Auswählen aus den in dem ersten Nachbarzelleneinrichtungsverhältnis eingerichteten Nachbarzellen von wenigstens einigen Nachbarzellen außer der Weiterreichungszielzelle als angehende Zellen;
wobei die Kontextinformationen weiterhin benutzt werden zum: wenn die Benutzereinrichtung erfolgreich zufallsmäßigen Zugang durchführt und ehe die RRC-Verbindung wiederhergestellt wird, Anweisen der zweiten netzseitigen Vorrichtung zum Senden gemäß einem Nachbarzelleneinrichtungsverhältnis aktualisierter Kontextinformationen zu einer vierten netzseitigen Vorrichtung, zu der wenigstens einige Nachbarzellen der zweiten netzseitigen Vorrichtung gehören.

## Revendications

1. Procédé d'acquisition d'informations de contexte d'un équipement utilisateur, comprenant les étapes suivantes :
la réception (101), par un premier dispositif côté réseau auquel appartient une cellule de desserte d'un équipement utilisateur, d'un rapport de mesure envoyé par l'équipement utilisateur ;
la détermination (102), par le premier dispositif côté réseau, d'une cellule cible d'un transfert intercellulaire et d'une cellule candidate conformément au rapport de mesure et à une première relation de configuration de cellules voisines, dans lequel le rapport de mesure comprend une cellule qui respecte une exigence d'un événement de mesure et est mesurée par l'équipement utilisateur, dans lequel la première relation de configuration de cellules voisines comprend des cellules voisines du premier dispositif côté réseau, et dans lequel les cellules voisines du premier dispositif côté réseau comprennent des cellules voisines de la cellule de desserte de l'équipement utilisateur, et
l'envoi séparé (103), par le premier dispositif côté réseau, d'informations de contexte de l'équipement utilisateur à un deuxième dispositif côté réseau auquel appartient la cellule cible du transfert intercellulaire et à un troisième dispositif côté réseau auquel appartient la cellule candidate, dans lequel les informations de contexte sont utilisées pour rétablir une connexion de commande de ressource radio, RRC (Radio Resource Control), entre l'équipement utilisateur et le deuxième dispositif côté réseau ou le troisième dispositif côté réseau lorsqu'un transfert intercellulaire échoue ;
dans lequel la détermination, par le premier dispositif côté réseau, d'une cellule cible d'un transfert intercellulaire et d'une cellule candidate conformément au rapport de mesure et à une première relation de configuration de cellules voisines comprend :
la sélection, par le premier dispositif côté réseau, parmi au moins une cellule signalée dans le rapport de mesure, d'une cellule qui est l'une de cellules voisines configurées dans la première relation de configuration de cellules voisines et qui présente la meilleure qualité de signal, en tant que cellule cible du transfert intercellulaire ; et
la sélection, par le premier dispositif côté réseau, parmi les cellules voisines configurées dans la première relation de configuration de cellules voisines, d'au moins certaines cellules voisines, à l'exception de la cellule cible du transfert intercellulaire, en tant que cellules candidates ;
dans lequel les informations de contexte sont en outre utilisées pour : lorsque l'équipement utilisateur parvient à effectuer un accès aléatoire et avant que la connexion RRC soit rétablie, ordonner au deuxième dispositif côté réseau d'envoyer, conformément à une deuxième relation de configuration de cellules voisines, des informations de contexte mises à jour à un quatrième dispositif côté réseau auquel appartiennent au moins certaines cellules voisines du deuxième dispositif côté réseau.

2. Appareil auquel appartient une cellule de desserte d'un équipement utilisateur, comprenant :
une unité de réception de rapport (401), configurée pour recevoir un rapport de mesure envoyé par l'équipement utilisateur ;
une unité de détermination de cellules voisines (402), configurée pour déterminer une cellule cible d'un transfert intercellulaire et une cellule candidate conformément au rapport de mesure et à une première relation de configuration de cellules voisines, dans lequel le rapport de mesure comprend une cellule qui respecte une exigence d'un événement de mesure et est mesurée par l'équipement utilisateur, dans lequel la première relation de configuration de cellules voisines comprend des cellules voisines du premier dispositif côté réseau, et dans lequel les cellules voisines du premier dispositif côté réseau comprennent des cellules voisines de la cellule de desserte de l'équipement utilisateur ; et
une première unité d'envoi d'informations (403), configurée pour envoyer séparément des informations de contexte de l'équipement utilisateur à un deuxième dispositif côté réseau auquel appartient la cellule cible du transfert intercellulaire et à un troisième dispositif côté réseau auquel appartient la cellule candidate, dans lequel les informations de contexte sont utilisées pour rétablir une connexion de commande de ressource radio, RRC, entre l'équipement utilisateur et le deuxième dispositif côté réseau ou le troisième dispositif côté réseau lorsqu'un transfert intercellulaire échoue ;
dans lequel l'unité de détermination de cellules voisines comprend :
une première unité de détermination de cellules voisines de transfert intercellulaire, configurée pour sélectionner, parmi au moins une cellule signalée dans le rapport de mesure, une cellule qui est l'une de cellules voisines configurées dans la première relation de configuration de cellules voisines et qui présente la meilleure qualité de signal, en tant que cellule cible du transfert intercellulaire ; et
une première unité de détermination de cellule candidate, configurée pour sélectionner, parmi les cellules voisines configurées dans la première relation de configuration de cellules voisines, au moins certaines cellules voisines, à l'exception de la cellule cible du transfert intercellulaire, en tant que cellules candidates ;
dans lequel les informations de contexte sont en outre utilisées pour : lorsque l'équipement utilisateur parvient à effectuer un accès aléatoire et avant que la connexion RRC soit rétablie, ordonner au deuxième dispositif côté réseau d'envoyer, conformément à une deuxième relation de configuration de cellules voisines, des informations de contexte mises à jour à un quatrième dispositif côté réseau auquel appartiennent au moins certaines cellules voisines du deuxième dispositif côté réseau.
